# EUROPÄISCHE PATENTSCHRIFT

(11) **EP 3 879 087 B1**
(45) Veröffentlichungstag und Bekanntmachung des Hinweises auf die Patenterteilung: **03.04.2024**
(21) Anmeldenummer: 21154775.7
(22) Anmeldetag: 02.02.2021
(51) Int. Cl.: F02B 37/18, F02B 37/24, F02B 39/00, F02B 39/16, F15B 15/10, F15B 15/14, F02B 77/11

(54) **PNEUMATISCHE DRUCKDOSENVORRICHTUNG FÜR ABGASTURBOLADER-WASTEGATE SOWIE VERBRENNUNGSMOTOR**
PNEUMATIC ACTUATOR DEVICE FOR TURBOCHARGER WASTEGATE AND COMBUSTION ENGINE
DISPOSITIF À CAPSULE PNEUMATIQUE POUR VANNE DE DÉCHARGE DE TURBOCOMPRESSEUR ET MOTEUR À COMBUSTION INTERNE

(30) Priorität: 11.03.2020 CH 2772020; 25.05.2020 CH 6172020
(43) Veröffentlichungstag der Anmeldung: 15.09.2021
(73) Patentinhaber: Liebherr Machines Bulle SA, 1630 Bulle (CH)
(72) Erfinder: Ricca, Fabio, 1009 Pully (CH); Macias, Octavio, 3174 Thörishaus (CH); Grangier, Frédéric, 1633 Vuippens (CH)
(74) Vertreter: von Tietzen und Hennig, Nikolaus

(56) Entgegenhaltungen:
- DE-A1- 2 951 811
- DE-A1- 4 040 760
- DE-A1-102008 026 882
- KR-A- 20110 021 581
- US-A1- 2016 178 105
- US-B1- 8 500 398

## Beschreibung

Die Erfindung betrifft eine Druckdosenvorrichtung zur pneumatisch mechanischen Verstellung eines Waste-Gates oder der Turbinenschaufeln eines Abgasturboladers, umfassend ein Gehäuse mit einer darin angeordneten Membran, die mit einem Stellglied zur Übertragung einer mechanischen Stellkraft auf das Waste-Gate oder mit einem Mechanismus zur Verstellung der Turbinenschaufeln verbunden ist.

Ausgangspunkt der nachfolgenden Ausführungen sind dynamisch betriebene Verbrennungskraftmaschinen mit Aufladung. Wünschenswert ist es, dass eine wirksame Verdichtung bereits bei vergleichsweise geringen Motordrehzahlen/-leistungen erzielt wird und mit zunehmender Leistungsanforderung ausreichend schnell gesteigert werden kann. Eine die entsprechenden Anforderung erfüllende Auslegung des Abgasturboladers führt dazu, dass seine thermische und/oder mechanische Belastbarkeitsgrenze bereits weit unterhalb des Volllastbetriebs der Verbrennungskraftmaschine erreicht wird. Um den Betrieb des Abgasturboladers auch im Volllastbetrieb der Verbrennungskraftmaschine zu ermöglichen, wird üblicherweise die Leistungsaufnahme der Turbine begrenzt.

Im einfachsten Fall enthält der Abgaspfad eine Bypass-Leitung zur Turbine, die über das sogenannte Waste-Gate geschaltet werden kann. Bei geringen Abgasmengen ist das Waste-Gate geschlossen, der für die Aufladung vorgesehene Abgasstrom wird dem Turbolader vollständig zugeführt. Im Betrieb mit hoher Last oder im Volllastbetrieb öffnet das Waste-Gate, so dass ein Teil des Abgasstroms über die Bypass-Leitung am Turbolader vorbeigeführt werden kann.

Die Betätigung des Waste-Gates kann mechanisch erfolgen, bspw. über eine Druckdose. Eine solche Druckdose enthält eine Membran, die auf eine bewegliche Stellstange zur Betätigung des Waste-Gates einwirkt. In Abhängigkeit eines der Druckdose zugeführten Druckniveaus übt die Membran über die Stellstange auf das Waste Gate entgegen ihrer Rückstellvorrichtung eine Kraft aus, wodurch sich eine definierte Öffnungsweite des Waste-Gates einstellt. Üblicherweise ist das der Druckdose zugeführte Druckniveau der im Ansaugtrakt erzeugte Unterdruck. Alternativ kann durch einen entsprechenden anderen Aufbau der Druckdose der Abgasdruck zugeführt werden. Ein anderes bekanntes Prinzip, welches eine verbesserte Anpassung der Aufladung an den Motorbetriebspunkt ermöglicht, ist die Verwendung eines Abgasturboladers, dessen Turbine verstellbare Leitschaufeln aufweist. Bekannt ist dies als sogenannter "Variablen Turbinengeometrielader (VTG). Die Verstellung der Leitschaufeln kann ebenso mechanisch mittels Druckdose erfolgen.

Ein Problem solcher Abgasturbolader ist die enorme Temperaturentwicklung, bedingt durch die heißen Abgase. Insbesondere im Volllastbetrieb treten im Bereich des Waste-Gates bzw. den Turbinenschaufeln des Abgasturboladers sehr hohe Temperaturen auf, die über die Umgebungsluft per Konvention die Druckdosenwand erwärmen können. Noch gravierender ist die Aufheizung der sich in der Druckdose befindenden Membran über die Verstellkinematik (Stellstange) des Waste-Gates bzw. des Turboladers per Konduktion. Hinzu kommt eine Konduktion über die Fixierung der Druckdose am Abgasturbolader. Eine zu starke Erhitzung einer solchen Membran beschleunigt deren Alterungsprozess oder führt gar zu ihrer augenblicklichen Zerstörung. Sinnvollerweise sollte die Temperatur zur Schonung der Membran auf maximal 180 Grad begrenzt werden.

Bei vielen Anwendungen genügt die Temperatur der Umgebungsluft zur Kühlung der Druckdose, weshalb eine Bedrohung der Membran vor thermischer Beschädigung zu vernachlässigen ist. Anders ist dies bei Spezialanwendungen, bspw. bei Verbrennungskraftmaschinen für maritime Anwendungen. Internationale Übereinkommen (bspw. die International Convention for the Safety Of Life At Sea (SOLAS)) verlangen für Passagier- und Frachtschiffe spezielle Sicherheitsvorkehrungen. Darunter fällt auch eine Begrenzung der Oberflächentemperatur einer Verbrennungskraftmaschine auf maximal 220 Grad, was sich oftmals nur durch eine wärmedämmende Kapselung gewisser Bereiche und Komponenten der Verbrennungskraftmaschine erreichen lässt. Naturgemäß müssen demnach die Abgasseite und die Luftstrecke beginnend von der Verdichtung bis zur Ladeluftkühlung thermisch isoliert werden, meistens durch eine gehäuseartige Kapselung. Eine solche Kapselung kann auch aus Lärmemissionsgründen erforderlich sein.

Ein Nachteil einer solchen Kapselung ist deren nachteilige Auswirkung auf die thermischen Umgebungsbedingungen im Bereich des Abgasturboladers. Auch wenn die Druckdose außerhalb der Kapselung angeordnet sein kann, liegt eine deutlich höhere thermische Belastung der Druckdose und der sich darin befindenden Membran vor. Denn die Kappselung des Abgasturboladers, der als Wärmequelle für den Konduktionspfad zur Druckdose wirkt, führt zu einem Temperaturanstieg unter ansonsten gleichen Betriebsbedingungen. Darüber hinaus muss ein wesentlich höherer Anteil der Wärmeleistung über die beiden mechanischen Kopplungspfade (i) die mechanische Fixierung der Druckdose und (ii) der Stellstange zwischen dem Waste-Gate und der Membran von der gekappselten Wärmequelle abgeführt werden.

Die thermische Belastung der Druckdose und der sich darin befindenden Membran kann allerdings nochmals gravierender sein, wenn z.B. zur Einhaltung von Oberflächentemperaturen auch die Notwendigkeit einer Kappselung der Druckdose und aller mechanisch mit der Druckdose verbundenen Bauteile vorliegt. Dies kann über eine zweite Kappselung, welche sich bereits ausserhalb derjenigen Kappselung befindet, die den Abgasturbolader umgibt, realisiert werden. Hierdurch bleibt zwar eine Abschottung von der Druckdose zu dem Abgasturbolader vorhanden. Jedoch wird durch die zweite Kappselung die Konvektion als eine rein passiv bestehende Kühlung der Druckdose stark eingeschränkt oder gar unterbunden.

Ein Überhitzen der Druckdose kann während des Betriebs der Verbrennungskraftmaschine auftreten, jedoch auch nach dem Abschalten der Maschine, wenn die Kühlung des Abgasturboladers ausbleibt und die in seinem Gehäuse gespeicherte thermische Energie die Druckdose bzw. Membran aufheizt. Abhilfe kann ein vollständig gekühlter Abgasturbolader schaffen, was jedoch Spezialkomponenten verlangt und damit höhere Kosten verursacht. Zudem schränkt dies die Auswahl verfügbarer Abgasturbolader auf dem Markt deutlich ein. Sofern auf eine Spezialkomponente zurückgegriffen werden würde, besteht in Bezug auf das Turbolader-Matching für den real verfügbaren Turbolader mit hoher Wahrscheinlichkeit eine grössere Abweichung zu dem Turbolader mit der optimalen Charakteristik. Ferner führt eine starke Kühlung im Bereich des Abgassammlers in der Regel zu direkten Wirkungsgradverlusten. Aus der DE10 2018 026882 A1 ist bereits eine Druckdose mit doppelwandigem Gehäuse bekannt. Zwischen den Gehäusewandungen ist ein Kühlkanal integriert, um eine bessere Wärmeabfuhr der Druckdose zu erreichen. Ein Nachteil einer solchen Lösung besteht darin, dass die bestehenden Druckdosen umfangreich modifiziert werden müssen.

Aus den Dokumenten KR 2011 0021581 A, DE 40 40760 A1 sowie DE 29 51811 A1 sind weitere Möglichkeiten vorbekannt, bei diesen Haltemittel zur Montage der Druckdose Kühlkanäle integrieren, die zumindest eine indirekte Kühlung der Druckdose ermöglichen. Eine optimale Kühlwirkung für die Druckdose wird jedoch auch dadurch nicht erreicht.

Gesucht wird daher nach einer konstruktiven Lösung für eine Druckdose, um die vorgenannten Probleme zu überwinden.

Zur Aufgabenlösung wird eine Druckdosenvorrichtung gemäß den Merkmalen des Anspruchs 1 vorgeschlagen. Vorteilhafte Ausführungen der Druckdosenvorrichtung sind Gegenstand der abhängigen Ansprüche.

Die Erfindung schlägt eine Druckdosenvorrichtung vor, die von einer konventionellen Druckdose ausgeht. Erfindungsgemäß wird diese Druckdose jedoch um ein oder mehrere Kühlkanäle erweitert, die innerhalb oder im Bereich der Gehäusewand der Druckdose verlaufen. Der eine oder die mehreren Kühlkanäle können von einem Kühlmedienstrom durchströmt werden, wodurch Wärmeenergie von der Gehäusewand an das Kühlmedium übertragen werden kann. Durch diese konstruktive Maßnahme wird eine ausreichende Kühlleistung fokussiert an dem Ort eingebracht, wo diese tatsächlich benötigt wird.

Die Mantelfläche des Gehäuses der Druckdose dient demzufolge als Kühlfläche, die unter Ausnutzung der Konvektion den erforderlichen Wärmeabtrag von der Membran zum Kühlmedium ermöglicht. Bevorzugt liegt eine möglichst großflächige Umströmung der Gehäusemantelfläche der Druckdose vor, um einen ausreichenden Wärmeabtrag sowohl während des Betriebs der Verbrennungskraftmaschine als auch nachfolgend der Deaktivierung der Verbrennungskraftmaschine sicherzustellen. Insbesondere ist die Dimensionierung der Kühlkanäle derart gewählt, sodass diese auch nach dem Abschalten etwaiger Strömungserzeugungsmittel innerhalb des Kühlkreislaufs und dem dadurch bedingt abnehmenden bzw. komplett ausbleibenden Strömungsvolumen des Kühlmediums durch die Kühlkanäle eine ausreichende Kühlleistung sicherstellen.

Da ein Kernaspekt der Erfindung darin besteht, eine bestehende Druckdose möglichst nicht modifizieren zu müssen, wird erfindungsgemäß vorgeschlagen, am Gehäuse der Druckdose wenigstens ein Anbauteil zu montieren, das nach erfolgten Montage vorzugsweise an der Mantelfläche des Druckdosengehäuses dichtend anliegt. Dieses Anbauteil weist einen oder mehrere Kühlkanäle auf, die einen Kühlmedienstrom um die Mantelfläche des Druckdosengehäuses ermöglichen. Hierdurch lässt sich auf einfache Weise eine bestehende Verbrennungskraftmaschine mit einer auf die Druckdose fokussierten Kühlfunktion nachrüsten.

Ein solches Anbauteil kann vorzugsweise schellenartig ausgeführt sein, welches die Mantelfläche der Druckdose umgreift. Der Schellen-Innendurchmesser des Anbauteils ist auf den Außenumfang der Druckdose abgestimmt. Das Anbauteil kann einteilig ausgeführt sein, besser ist jedoch ein zwei- oder mehrteiliger Aufbau. Vorstellbar ist es, dass die Schellenform durch zwei miteinander verbindbare, insbesondere verschraubbare Schellenteil-Elemente gebildet ist. Idealerweise sind die Schellenteil-Elemente identisch ausgeführt.

Im Bereich der Innenwand des Anbauteils befindet sich wenigstens eine zur Kühlung dienende Nut. Bevorzugt erstreckt sich diese teilweise der Umfangsrichtung des Anbauteils. Ganz besonders bevorzugte ist diese als Ringnut ausgeführt. Bevorzugt befindet sich eine in Axialrichtung der Innenwand des Anbauteils eine zentrale Lage der zur Kühlung dienenden Nut in der Innenwand. Nach Montage liegt der nicht mit einer Nut durchsetzte Bereich der Innenwand des Anbauteils an der Mantelfläche der Druckdose an, so dass diese Nut mit der Mantelfläche der Druckdose, d.h. mit dem Druckdosen-Gehäuse einen Kühlraum ausbildet, der besonders bevorzugt ringförmig ist. Bevorzugt umschliesst dieser Kühlraum eine möglichst große Umfangsfläche der Druckdose, damit eine möglichst große Umfangsfläche der Druckdose mit dem Kühlmedium umströmt wird.

Ferner kann das Anbauteil im Bereich des gebildeten Kühlraums mit ein oder mehreren Radialbohrungen versehen sein, die zum Anschluss der Kühlleitungen eines externen Kühlkreislaufs dienen. Sodann ist es nicht erforderlich eine bestehende Druckdose, um entsprechende Anschlüsse zu erweitern.

Die Innenwand des Anbauteils kann neben der vorgenannten mindestens einen Kühlnut und eine oder mehrere zusätzliche Nuten zur Einbringung von Dichtelementen aufweisen. Die Dichtungsnuten sind idealerweise als Ringnuten ausgeführt, so dass jeweils der Einsatz eines oder ggf. mehrerer O-Ringe als Dichtelement möglich ist. Die ein oder mehreren in die Dichtungsnuten eingesetzten Dichtelemente dienen zur Abdichtung des durch den Anbau des Anbauteils gebildeten Kühlraumes. Sinnvollerweise ist daher in Axialrichtung des Anbauteils die Anordnung jeweils wenigstens einer Dichtungsnut vor und hinter der Kühlnut vorgesehen.

Die axiale Erstreckung des Anbauteils ist auf die axiale Länge der Druckdose abgestimmt. Vorzugsweise kann sich das Anbauteil über zumindest eine Stirnseite der Druckdose hinaus erstrecken und idealerweise neben der Mantelfläche die jeweilige Stirnfläche der Druckdose zumindest teilweise mit umschliessen. Sinnvoll ist dies bspw. im Bereich eines Halteelementes zur Montage der Druckdose am Abgasturbolader. In diesem Fall kann das sich über die Stirnfläche erstreckende Anbauteil ebenfalls zur Montage der Druckdose am Turbolader genutzt werden. Bevorzugt ist das Anbauteil im Bereich wenigstens einer Stirnfläche der Druckdose zusätzlich mit Schraubelementen mit der Druckdose fixiert.

Ferner kann vorgesehen sein, dass das Anbauteil im Bereich seiner Innenwand neben der wenigstens einen Kühlnut und den ein oder mehreren Dichtungsnuten zusätzlich wenigstens ein weiteres ausgenommenes Volumen, insbesondere in Form eines Ringraums, aufweist. Ein solches Volumen ist auf einen möglichen radialen Vorsprung im Bereich der Mantelfläche des Druckdosengehäuses, bspw. eine Ringwulst positionell abgestimmt, sodass ein solcher Vorsprung nach erfolgter Montage des Anbauteils in dieses ausgesparte Volumen des Anbauteils eingreift. Hierdurch wird nicht nur eine Positionierhilfe des Anbauteils gegeben, sondern auch eine bessere Fixierung des Anbauteils auf der Mantelfläche der Druckdose erreicht.

Das Anbauteil muss nicht zwingend schellenartig ausgeführt sein. Denkbar ist eine beliebige Ausgestaltung eines solchen Anbauteils, bspw. als Teilbereich des gekapselten Verbrennungsmotors. Es genügt, dass die Gehäusemantelfläche der Druckdose zumindest abschnittsweise durch das Anbauteil umgeben ist. Auch muss das durch den Kühlkanal durchströmende Kühlmedium nicht zwingend unmittelbar in Kontakt mit der Gehäusemantelfläche der Druckdose kommen. Das Anbauteil kann bspw. ein oder mehrere Kühlkanäle zur Bereitstellung eines Kühlmittelstromes, der die Mantelfläche des Gehäuses der Druckdose zumindest abschnittsweise umströmt, umfassen. Hierbei kann zwischen Gehäusemantelfläche und Anbauteil ein Luftspalt vorgesehen sein, so dass die Druckdose mit dem Kühlmedium nicht unmittelbar in Kontakt kommt.

Bevorzugt ist ein ringförmiger Luftspalt vorgesehen, besonders bevorzugt über den gesamten, durch das Anbauteil umfassten Mantelbereich der Druckdose.

Der eine oder die mehreren Kühlkanäle sind derart im Anbauteil orientiert, dass das dort enthaltene Kühlmedium die umfasste Mantelfläche der Druckdose über den gesamten Umfang umströmen kann. Vorstellbar ist ebenso, dass ein Teilbereich eines gesonderten Haltemittels zur Fixierung der Druckdose am Verbrennungsmotor durch das Kühlmedium umströmt und damit zumindest abschnittsweise gekühlt wird. Gleiches gilt für eine Stellstange zur Betätigung des Waste-Gates bzw. zur Betätigung der Leitschaufeln eines VTG-Turboladers.

Das vorgenannte Anbauteil kann mehrteilig ausgeführt sein, insbesondere aus zwei Anbauteilhälften bestehen. Über Verbindungslaschen lassen sich die Hälften im Bereich ihrer Kontaktkanten gegenseitig verbinden, insbesondere miteinander verschrauben. Wenigstens eine Anbauteilhälfte kann wenigstens eine Montagelasche zur Fixierung am Verbrennungsmotor, insbesondere am Kapselungsgehäuse des Verbrennungsmotors aufweisen.

Das Anbauteil muss die Gehäusemantelfläche der Druckdose in Längsrichtung der Druckdose nicht vollständig umfassen. Denkbar ist es, dass die Druckdose in Längsrichtung nur abschnittsweise umgeben ist. Insbesondere der Bodenbereich der Druckdose, der bspw. mittels eines gesonderten Haltemittels am Verbrennungsmotor montiert ist, wird umgeben, während der obere, den Druckanschluss umfassende Bereich der Druckdose durch das Anbauteil nicht umgeben ist. Hierdurch bleibt dieser von aussen frei zugänglich.

Das Anbauteil, insbesondere die Anbauteilhälften können jeweils ein oder mehrere Anschlüsse für Kühlmittelleitungen umfassen.

Eine alternative oder ergänzende Ausführung zur vorgenannten Variante mit Anbauteil besteht darin, die Kühlkanäle innerhalb eines Haltemittels der Druckdose vorzusehen. Die Kühlung des Haltemittels kann dabei alternativ zur Kühlung mittels Anbauteil oder aber auch ergänzend integriert werden.

Als Haltemittel ist eine Halterung bzw. ein Haltearm zur Montage der Druckdose an einer Komponente der Verbrennungskraftmaschine zu verstehen. Üblicherweise wird die Druckdose mittels des Haltemittels am Gehäuse des Turboladers installiert. Die hohen Temperaturen im Bereich des Turboladers übertragen sich entsprechend auf das Haltemittel. Durch die aktive Kühlung des Haltemittels kann ein Wärmeübertrag auf die Druckdose reduziert bzw. eine aktive Kühlung der Druckdose und/oder des Stellgliedes erreicht werden.

Besonders bevorzugt ist der Kühlkanal bzw. sind die mehreren Kühlkanäle durch einen an das Gehäuse der Druckdose angrenzenden Bereich des Haltemittels geführt, um den Wärmeübertrag zwischen Druckdose und Haltemittel zu optimieren. Idealerweise umfasst das Haltemittel endseitig einen volumenvergrößerten Abschnitt, um ausreichend Platz für die Integration des Kühlkanals oder der mehreren Kühlkanäle mit einem ausreichenden Durchmesser zu schaffen. Denkbar ist es, dass mehrere Kühlkanäle mit gleichgerichteter oder gegenläufiger Strömungsrichtung vorgesehen sind. Die Kühlkanäle erstrecken sich vorzugsweise quer zur Längsachse des Haltemittels.

Sofern ein Wärmeabfluss von dem Druckdosengehäuse in den Kühlkanal des Haltemittels vorgesehen ist, weil dieser Kühlkanal eine im Vergleich zum Druckdosengehäuse eine besonders starke Wärmesenke darstellt, weist das Haltemittel vorzugsweise einen derart dimensionierten Querbereich auf, der für die Konduktion eine grosse Querschnittsfläche zur Verfügung stellt. Der Querbereich kann endseitig in eine Richtung quer zur Längsachse erweitert sein. Der erweitere Querbereich bildet ein Art Konsole zur Aufnahme der Druckdose. Vorzugsweise bildet nur ein Flächenteil der zur Druckdose hingerichteten Oberfläche des erweiterten Querbereichs die Anlagefläche/Kontaktfläche für die Gehäusefläche der Druckdose. Insbesondere steht die Anlagefläche mit dem Boden der Druckdose in Kontakt.

Ein oder mehrere Aussparungen in dem Querbereich dienen zur Durchführung von Befestigungsschrauben, um die Druckdose mit dem Querbereich zu verbinden. Wenigstens eine weitere Aussparung kann zur Durchführung des Stellgliedes vorgesehen sein.

Das der Druckdosenvorrichtung gegenüberliegende Ende des Haltemittels kann ein oder mehrere Montagestellen für die Fixierung des Haltemittels an einer Komponente der Verbrennungsmaschine, insbesondere dem Turboladergehäuse aufweisen. Die Montagestellen können Bohrungen oder Buchsen sein, die eine Verschraubung mit der Komponente ermöglichen. Um hier die Kontaktfläche zwischen der Komponente und dem Haltemittel und damit den Wärmeübertrag von der höher temperierten Komponente auf das Haltemittel zu minimieren sind ein oder mehrere flächige Aussparung im Montagebereich des Haltemittels an der Komponente vorgesehen.

Neben der erfindungsgemäßen Druckdose betrifft die vorliegende Erfindung zusätzlich eine Verbrennungskraftmaschine mit Turboaufladung und wenigstens einer Druckdosenvorrichtung gemäß der vorliegenden Erfindung. Demzufolge ergeben sich für die Verbrennungskraftmaschine dieselben Vorteile und Eigenschaften, wie sie bereits vorstehend anhand der erfindungsgemäßen Druckdosenvorrichtung ausführlich dargelegt wurden. Auf eine wiederholende Beschreibung wird aus diesem Grund verzichtet.

Gemäß einer vorteilhafter Ausführungsformen der Verbrennungskraftmaschine weist diese mindestens einen Kühlkreislauf zur Kühlung auf; insbesondere zur Kühlung der Brennkammern. Ein Kühlkreislauf der Verbrennungskraftmaschine ist mit einem Abzweig versehen, sodass ein entsprechender Kühlmedienstrom des Kühlkreislaufes durch wenigstens einen Kühlkanal der Druckdosenvorrichtung geführt werden kann. Sofern das die Druckdosenvorrichtung durchströmende Kühlmedium von derselben Umwälzpumpe wie das zur Brennraumkühlung und/oder der Ladeluftkühlung umgewälzt wird, ist eine Parallelführung des Kühlkanals zur Druckdosenvorrichtung bevorzugt; zumindest innerhalb des Abschnitts über den das Kühlmedium den Kühlkanal der Druckdosenvorrichtung durchströmt.

Die Verbrennungskraftmaschine kann beispielsweise in Form eines V-Motors ausgeführt sein, wobei die wenigstens zwei Zylinderbänke mit jeweils einem Abgasturbolader ausgestattet sind. Jeder Abgasturbolader umfasst demnach eine entsprechende Druckdosenvorrichtung mit Anbauteilen zur Kühlung der Druckdose. In diesem Fall sind die Druckdosen und/oder die Einzelteile des Anbauteils idealerweise als Gleichteile ausgeführt.

Die Verbrennungskraftmaschine ist zudem gemäß vorteilhafter Ausführungsform mit einer thermischen Kapselung ausgestattet, die neben dem Abgasturbolader weitere Komponenten, wie bspw. das Waste-Gate, einen Abgassammler, usw. thermisch kapselt.

Weitere Vorteile und Eigenschaften der Erfindung sollen nachfolgend anhand eines in den Zeichnungen dargestellten Ausführungsbeispiels näher erläutert werden. Es zeigen:
- Figur 1:: eine schematische Darstellung der erfindungsgemäßen Verbrennungskraftmaschine mit Abgasturbolader und Druckdose,
- Figur 2:: eine Schnittdarstellung der erfindungsgemäßen Druckdosenvorrichtung mit angelegter Schelle,
- Figuren 3a - 3c:: unterschiedliche Ansichten eines Schellenteils des Anbauteils für die Druckdose,
- Figur 4:: eine perspektivische Seitendarstellung eines nicht erfindungsgemäßen Haltemittels mit integrierter Kühlleitung,
- Figur 5:: eine weitere Seitendarstellung des Haltemittels der Figur 4,
- Figuren 6a, 6b:: Skizzen des Querbereichs des nicht erfindungsgemäßen Haltermittels,
- Figur 7a, 7b:: Seitendarstellungen eines Turboladers mit mittels Haltemittel montierter Druckdosenvorrichtung aus verschiedenen Perspektiven,
- Figur 8:: ein Detailausschnitt einer nicht erfindungsgemäßen Verbrennungskraftmaschine,
- Figur 9:: eine Seitenansicht des Verbrennungsmotors mit alternativer Ausführung des Anbauteils,
- Figur 10:: eine Detailansicht des Turboladers mit montierter Druckdose und Anbauteil gemäß der Ausführung nach Figur 9,
- Figur 11:: eine Detailansicht des Anbauteils gemäß den Figuren 9 und 10,
- Figur 12:: eine Schnittdarstellung durch das Anbauteil der Figuren 9 bis 11 mit montierter Druckdose und
- Figur 13:: eine Schnittdarstellung des Anbauteils ohne eingesetzte Druckdose.

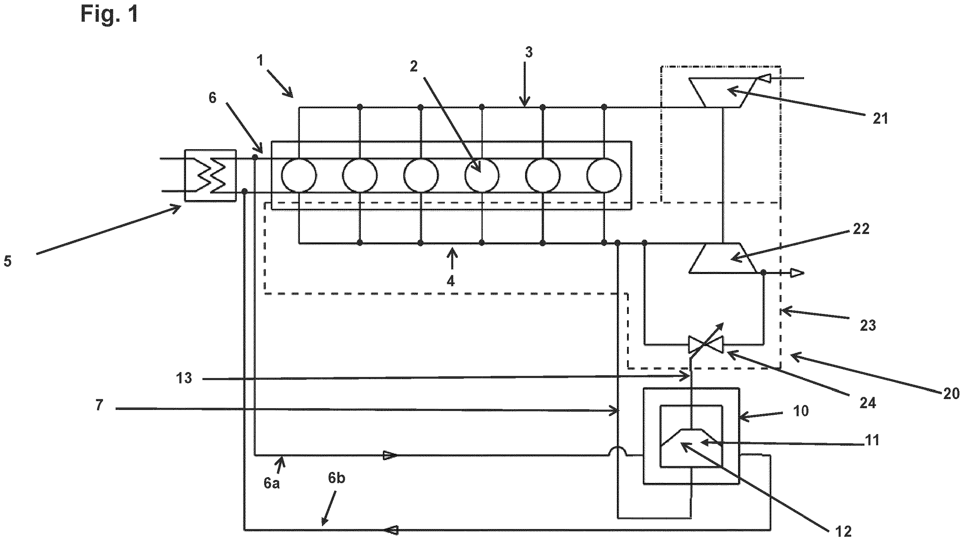

Figur 1 zeigt schematisch eine Verbrennungskraftmaschine in Reihenbauweise. Die Anwendung der Erfindung ist jedoch nicht auf einen solchen Motorentyp beschränkt und lässt sich bspw. auch für V-Motoren umsetzen.

Die gezeigte Verbrennungskraftmaschine 1 umfasst mehrere Brennräume 2. Die notwendige Verbrennungsluft wird über den Luftverteiler 3 zugeführt. Das Verbrennungsabgas wird mittels Abgassammler 4 gesammelt und zumindest teilweise einem Abgasturbolader 20 zugeführt. Die durch den Abgasstrom angetriebene Turbine 22 treibt den Verdichter 21 für die Z Ansaugluft des Motors 1 an. Je nach Last der Verbrennungskraftmaschine kann das Waste-Gate 24 geöffnet werden. Bei geöffnetem Waste-Gate 24 kann ein Teil des Abgasstroms an der Turbine 22 vorbeigeführt werden. Das Waste-Gate 24 wird über einen mechanischen Stellhebel 13 betätigt, dessen Position über eine Druckdose 10 gesteuert wird. Die Druckdose 10 umfasst eine Membran 12, deren Position abhängig von dem Druck in der Druckammer 11 ist, und diese auf den Stellhebel 13 überträgt. Die Druckkammer 11 ist über eine Steuerdruckleitung 7 mit dem Abgassammler 4 verbunden.

Im vorliegenden Beispiel sind der Turbolader 20, das Waste-Gate 24 sowie der Abgassammler 4 durch eine thermische Isolation 23 gekapselt. Dennoch besteht eine thermische Kopplung zwischen dem Abgasturbolader 20 und der Druckdose 10 zumindest über den Stellhebel 13, wodurch es zu einer unerwünschten Erwärmung der Membran 12 kommen kann.

Vor diesem Hintergrund wird erfindungsgemäß vorgeschlagen, eine separate Kühlung der Druckdose 10 zu schaffen. In dem in Figur 1 gezeigten Ausführungsbeispiel besteht zu dem Kühlwasserpfad 6 der Verbrennungskraftmaschine 1, der unter anderem die Brennraumumgebung kühlt, ein Parallelpfad mit den Leitungen 6a, 6b, wodurch eine Wärmeabfuhr von der Druckdose 10 ermöglicht wird. Zwecks Vereinfachung sind für das Betreiben des Kühlkreislaufes 6 allgemein bekannte Komponenten, wie beispielsweise Umwälzpumpen, nicht abgebildet. Der Abgasturbolader 20 bzw. das Waste-Gate 24 weisen hingegen keine eigenständige Kühlung auf, um hier im Rahmen des Turbomatchings die größte mögliche Auswahl an verfügbaren Turboladern zu haben.

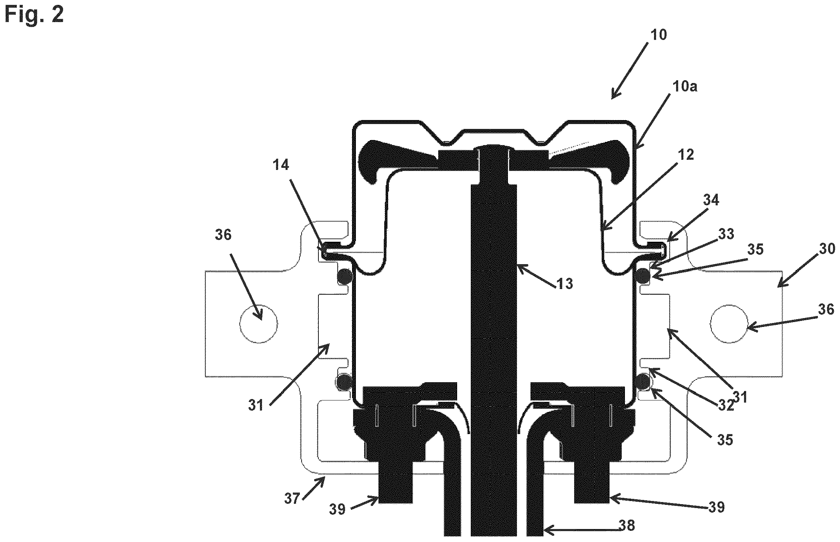

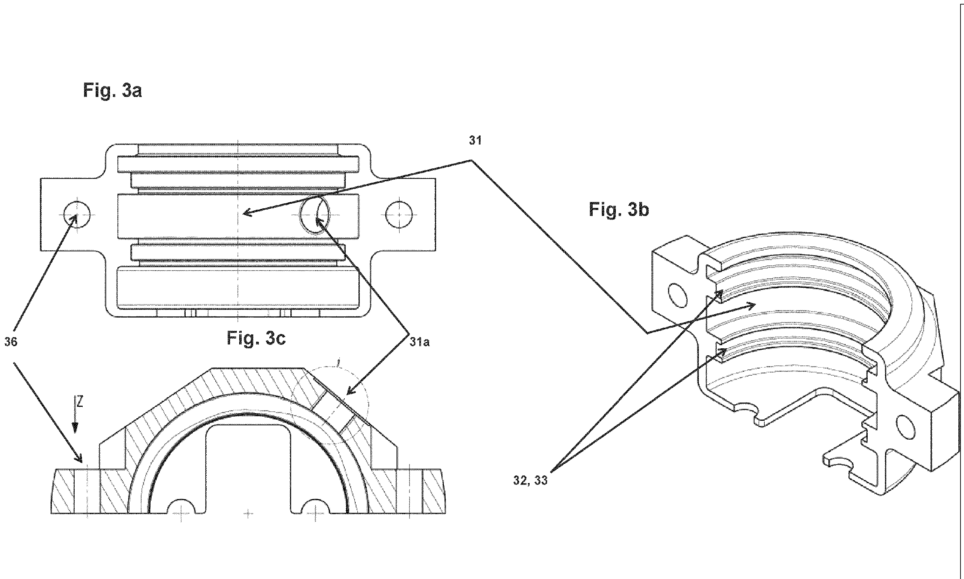

Um den Nachrüstaufwand für die Druckdosenkühlung möglichst gering zu halten, bleibt auch die Druckdose 10 unverändert. Stattdessen wurde ein passendes Anbauteil für eine konventionelle Druckdose entwickelt, um diese mit gesonderten Kühlkanälen nachzurüsten. Ein Ausführungsbeispiel für ein solches Anbauteil ist in den Darstellungen der Figuren 2, 3a-3c zu erkennen. Das Anbauteil hat im Wesentlichen die Form einer Schelle 30, die sich aus zwei idealerweise identischen Schellenteil-Elementen zusammensetzt. Die Schelle 30 kann um die Mantelfläche 10a der Druckdose 10 gelegt und dort fixiert werden. Das Abmaß des Innenradius der Schelle 30 ist auf die Mantelfläche 10a der Druckdose 10 abgestimmt, so dass die Schelle 30 über einen weitläufigen Längenabschnitt an dem Druckdosengehäuse anliegt. Zusammen mit der Mantelfläche 10a bildet die Schelle 30 ein oder mehrere Kühlkanäle aus, durch diese das aus dem Kühlkreislauf 6 der Verbrennungskraftmaschine 1 abgezweigte Kühlmittel strömen kann.

Erzeugt wird der wenigstens eine Kühlkanal durch eine in die Innenwand der Schelle 30 eingebrachte Nut. Die Nut ist derart gestaltet, dass sich in Bezug auf die beiden an der Druckdose 10 angebauten Schellenteil-Elemente 30 ein Ringraum 31 vorliegt, der rotationssymmetrisch zu der Längsachse der Druckdose 10 angeordnet ist. Dieser Ringraum 31 bildet zusammen mit der Mantelfläche 10a der Druckdose 10 einen abgeschlossenen Ringraum 31 zur Kühlung der Druckdose 10. Dadurch kann ein ausreichender Teilbereich der Mantelfläche 10a der Druckdose 10 durch ein Kühlmedium innerhalb des Ringraumes 31 umströmt werden. Bevorzugt liegt eine möglichst großflächige Umströmung der Mantelfläche 10a vor.

Der als Kühlkanal dienende Ringraum 31 muss einen entsprechend hohen Querschnitt aufweisen, so dass bei vorliegender maximaler Vorlauftemperatur des Kühlmediums und der maximalen Abgastemperatur noch ein ausreichender Wärmeabtrag möglich ist. Maßgeblich für den Querschnitt des Ringraum 31 ist, dass auch beim Abschalten der Verbrennungskraftmaschine 1 bei Maximaltemperatur im Turboladergehäuse und Maximaltemperatur des Kühlmediums noch ein ausreichend hoher Wärmeabtrag durch den als Kühlkanal dienenden Ringraums 31 vorhandene Kühlmedium sichergestellt ist, um eine thermische Schädigung der Druckdosenmembran 12 auszuschliessen. Hierbei soll die Menge an Kühlmedium im Ringraum 31 bestehende freie Wärmekapazität ausreichend sein, d.h. der Ringraum 31 entsprechend viel Kühlmedium beherbergen, so dass auf eine Fortführung der Kühlmedienumwälzung nach dem Abschalten der Verbrennungskraftmaschine 1 verzichtet werden kann.

Durch in den Ringraum 31 mündende Radialbohrungen 31a in den Schellenteil-Elementen 30 entstehen zwei Anschlüsse für die Anbindung des als Kühlkanal dienenden Ringraums 31 an den Kühlpfad 6a, 6b. Klarerweise werden diese Radialbohrungen 31a derart platziert, so dass sich entlang der Kühlfläche strömungsmechanisch zwei parallele Kühlkanäle ergeben.

In zwei weitere ringförmige Radialnuten 32, 33 im Innenradius der Schelle 30 können Dichtringe 35 eingesetzt werden, um einen Kühlmittelaustritt zwischen der Kühlfläche und der Schelle 30 zu vermeiden. Dabei existiert jeweils eine Radialnut 32, 33 mit eingesetztem Dichtring 35 in axialer Richtung vor und hinter dem Ringraum 31. Der Innenradius der Schelle 30 ist darüber hinaus mit einer weiteren Radialnut 34 versehen. Diese bildet eine in etwa komplementäre Aussparung zu einem Gehäuseüberstand 14 der Druckdose 10 aus. Diese Aussparung 34 der Schelle 30 ist derart bemessen, so dass der Gehäuseüberstand 14 vollständig darin eintauchen kann, wobei bevorzugt an ausgewählten Oberflächenbereichen eine direkte Berührung zwischen dem Druckdosengehäuse und der Schelle 30 vorliegt. Durch diese Konstruktion kann eine bessere Fixierung der Schelle 30 erreicht werden. Zudem dient die Paarung aus Aussparung 34 und Vorsprung 14 als Montagehilfe, wenn die Schellenteil-Elemente 30 auf die Mantelfläche 10a der Druckdose angehalten werden und dann über sich durch die Verbindungsbohrungen 36 erstreckende Schraube aneinander befestigt werden.

Die im Ausführungsbeispiel dargestellte Schelle 30 umschließt die Druckdose 10 über ihre Mantelfläche hinaus und reicht weit in den Bereich ihres Deckels 37 an der Seite hinein, an der die Druckdose 10 an dem Haltemittel 38 durch Schrauben 39 angeschraubt ist, über den die Fixierung der Druckdose 10 an dem Turboladergehäuse 20 erfolgt. Durch eine entsprechende Konturgestaltung der Schelle 30 lässt sich in diesem Bereich ebenso eine verbesserte Fixierung erzielen und eine zuverlässigere Positionierung der Schelle 30 an der Druckdose 10 erreichen. An besagter Unterseite der Druckdose 10 kann die Schelle 30 ebenso durch die Schrauben 39 am Deckel der Druckdose 10 fixiert werden.

Eine entsprechend solide Fixierung der Schelle 30 an dem Druckdosengehäuse bietet den Mehrwert, dass durch den bereits funktionsbedingt notwendigen Anschluss der Kühlleitungen 6a, 6b an die Schelle 30 eine Fixierung der Kühlleitungen 6a, 6b vorliegt. Wie dem Fachmann bekannt ist, darf der Strömungswiderstand durch den als Kühlkanal der Druckdose dienende Ringraum 31 beinhaltenden Kühlpfad nicht zu groß sein, da ansonsten die Gefahr besteht, dass der Kühlmitteldurchsatz zu gering ist. Andererseits sollte der Durchsatz auch nicht unnötig hoch sein. Durch den Einbau einer richtig bemessenen Drossel kann ein sinnvoller Kühlmittelvolumenstrom erzielt werden. Vorzugsweise wird eine einstellbare Drossel verwendet, wodurch eine nachträgliche Justierung möglich bleibt.

Die Vorteile der Erfindung lassen sich wie folgt zusammenfassen:
- Die Kühlleistung wird fokussiert an dem Ort eingebracht, wo diese tatsächlich benötigt wird.
- Nach dem Abschalten der Verbrennungskraftmaschine 1 bleibt die Kühlung über einen ausreichend langen Zeitraum erhalten, bis die Umgebung entsprechend stark abgekühlt ist, so dass von der verbleibenden Wärmeübertragung auf die Membran 12 der Waste-Gate Druckdose 10 kein Beschädigungsrisiko mehr ausgeht.
- Diese Nachkühlung erfolgt rein passiv. Ein aktiver Nachlauf mit dem Risiko eines Ausfalls dieser Kühlfunktion besteht nicht. Selbst für einen Fehlerfall, der ohne Notfunktionen zu einem kompletten Ausfall aller Hilfsfunktionen der Verbrennungskraftmaschine 1 führen würde, muss für die besagte Nachkühlung keine Redundanz vorgehalten werden.

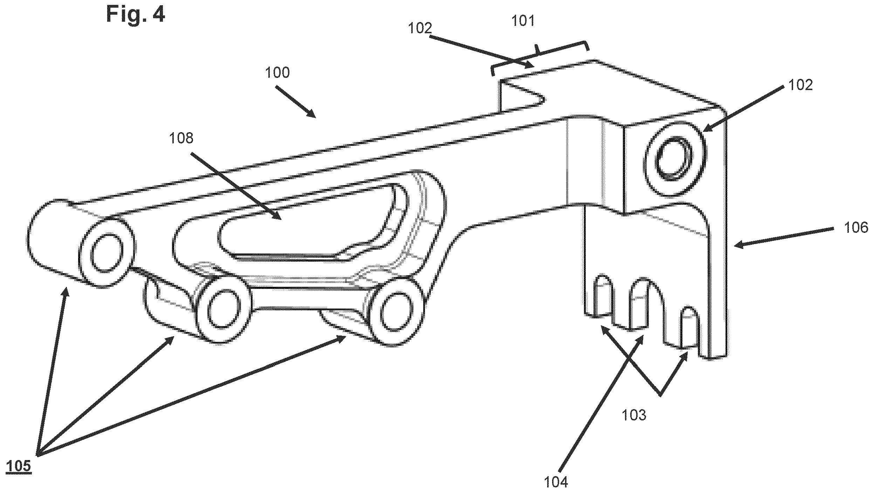

Eine alternative nicht, erfindungsgemäße Ausführung einer Druckdosenvorrichtung ist in den Figuren 4 bis 8 dargestellt. Bei dieser Ausführung werden die Kühlkanäle nicht in ein Anbauteil integriert, sondern stattdessen in ein Haltemittel 100 zur Installation der Druckdose 10 an einem Turbolader 22, insbesondere dessen Turbinengehäuse.

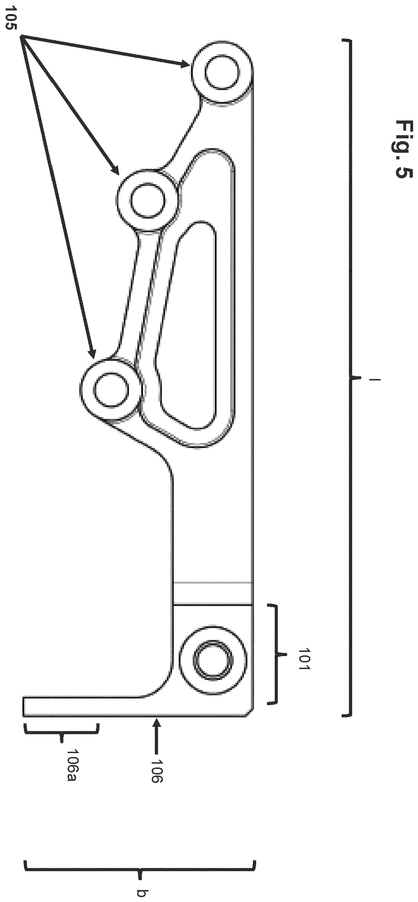

Das Haltemittel 100 ist in den Figuren 4, 5 im Detail dargestellt. Das längliche Haltemittel 100 hat eine Längserstreckung der Grösse I. Das in den Figuren 4, 5 gezeigte linke Ende weist insgesamt drei Buchsen 105 zur Durchführung von Schrauben für die Befestigung des Haltemittels 100 am Turbinengehäuses des Turboladers 22 der Verbrennungskraftmaschine auf. Im Bereich der Buchsen 105 ist zudem eine flächige Aussparung 108 vorgesehen, um die Kontaktfläche zwischen Turbinengehäuse 22 und Haltemittel 100 weitestgehend zu minimieren.

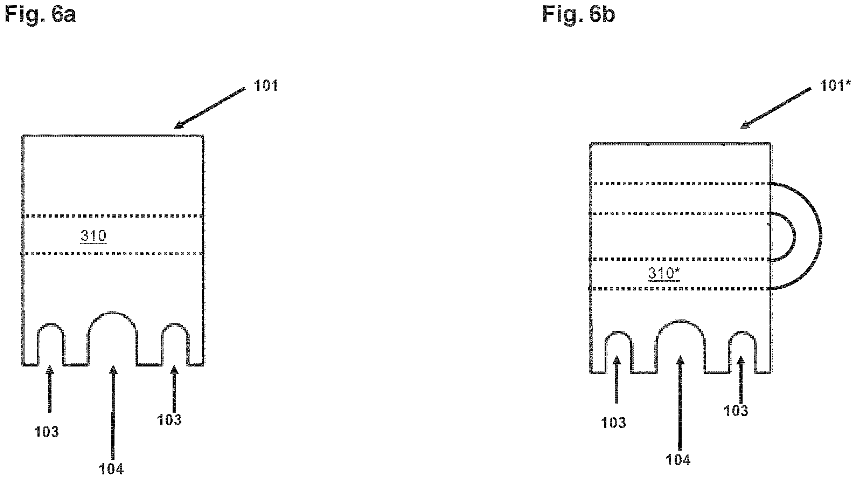

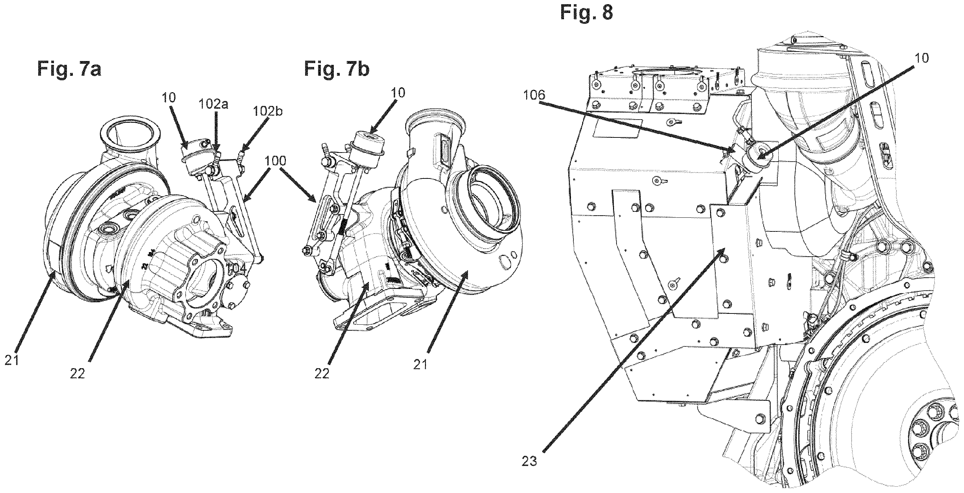

Das gegenüberliegende Ende des Haltemittels 100 sieht einen Bauteilabschnitt 101 mit vergrößertem Volumen vor, durch dieses sich der Kühlkanal 310 senkrecht zur Zeichnungsebene der Figuren 4, 5 und somit quer zur Längsachse des Haltemittels 100 erstreckt. An den Seitenflächen des Haltemittels 100 befinden sich die Öffnungen 102 des Kühlkanals 310, auf diese sich Anschlussstutzen 102a, 102b für die Kühlmittelzuführung 6a bzw. Kühlmittelabfuhr6b aufsetzen lassen (siehe Figuren 7a, 7b). Die Führung des Kühlkanals 310 quer zur Längsachse des Halters 100 ist der Figur 6a sowie 6b zu entnehmen, letztere zeigt eine Ausführung des Querbereichs 106* mit zwei parallel zueinander verlaufenden Kühlkanälen 310*, während die Ausführung des Querbereichs 106 in Figur 6a nur einen einzigen Kühlkanal 310 aufweist. Bei der Ausführung mit zwei oder mehreren Kühlkanälen 310* können diese in gleicher oder gegensätzlicher Richtung durchströmt sein.

Am volumenvergrößerten Bereich 101 schliesst sich ein vergrößerter Querbereich 106 an, der gleichzeitig die endseitige, der Druckdose 10 zugewandte Stirnseite des Haltemittels 100 bildet. Hierbei ist ersichtlich, dass die Fläche nur in eine Richtung konsolenartig auskragt, hier in der Zeichnungsebene der Figuren 4, 5 nach unten. Der äussere Bereich 106a der ausgedehnten Querbereich 106 bildet die Anschlussfläche/Kontaktfläche für die Druckdose 10. Aussparungen 103 der Anschlussfläche 106a dienen zur Durchführung von Schrauben, um die Druckdose 10 bzw. die Bodenseite des Druckdosengehäuses auf dem Querbereich 106a verschrauben zu können. Die mittige Aussparung 104 dient zur Durchführung des Stellgliedes 13, das sich vom Boden der Druckdose 10 parallel zum Haltemittel100 in Richtung des Turboladers 22 erstreckt.

Die Figuren 7a, 7b zeigen die Montageposition der Druckdose 10 bzw. die des Haltemittels 100 am Turbinengehäuse 22 des Turboladers. Figur 8 zeigt einen Teilauschnitt der Verbrennungskraftmaschine mit thermischer Isolation 23. Die Druckdose 10, ein Teil des Haltemittels 100 (hier der Querbereich 106) sowie ein Teilabschnitt bzw. Teilbereich der Stellstange 13 werden nicht von der thermischen Isolierung 23 abgedeckt. Bei einer alternativen Ausführung könnte jedoch die Stellstange 13 vollständig abgedeckt sein. Die innere Isolation 23 würde dann mit dem Querbereich 106 des Haltemittels 100 abschliessen.

Durch das gekühlte Haltemittel 100 wird ebenfalls eine Kühlung der Druckdose 13 bzw. der dortigen Membran 11 erzielt. Auf eine zusätzliche Kühlung der Druckdose 10 über ein Anbauteil 30 wird in dieser nicht erfindungsgemäßen Ausführung verzichtet, es spricht jedoch nichts dagegen, beide vorstehend aufgezeigten Lösungen zur Optimierung der Kühlwirkung miteinander zu kombinieren.

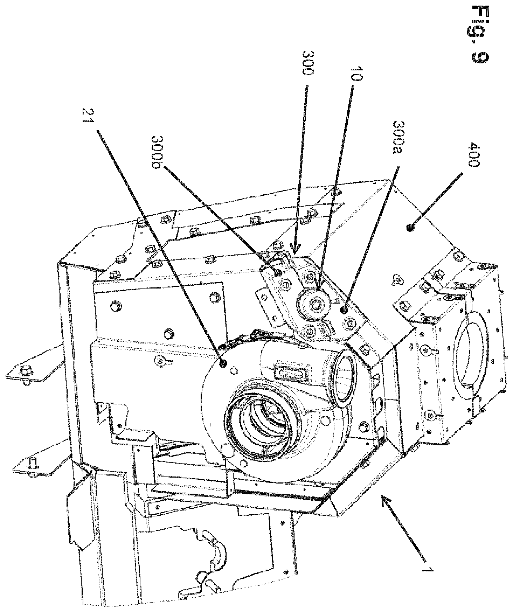

In den Figuren 9 bis 13 ist eine alternative Ausführung des Anbauteils 300 dargestellt. Dieses ist anders als in den Figuren 1 bis 3 nicht schellenartig gestaltet, sondern bildet einen Teilbereich des Kapselungsgehäuses 400 des Verbrennungsmotors 1. Das Anbauteil 300 wird hier aus zwei Anbauteilhälften 300a, 300b zusammengesetzt, die jeweils mit einer halbzylindrischen Aussparung versehen sind.

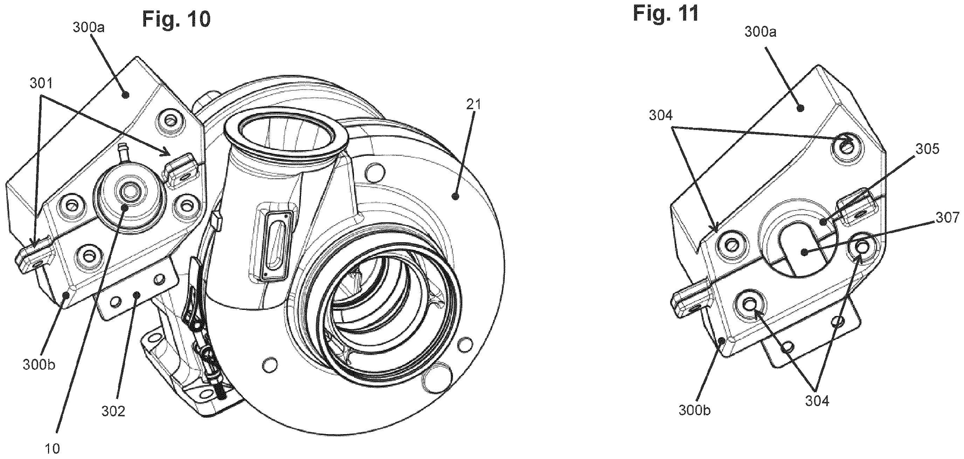

Ersichtlich ist hierbei, dass der obere Teil der Druckdose 10, der den Druckanschluss aufweist, frei bleibt und durch das Anbauteil 300 nicht umgegeben ist. Die beiden Anbauteilhälften 300a, 300b sehen im Bereich ihrer Kontaktflächen sich parallel zueinander erstreckende Verbindungslaschen 301 vor (siehe Figur 10). Die Verbindungslaschen 301 weisen Bohrlöcher auf, so dass sich diese miteinander verschrauben lassen. Jede Anbauteilhälfte 300a, 300b weist auf seiner aussen liegenden Oberfläche jeweils zwei Anschlüsse 304 für Kühlmittelleitungen auf. Die untere Anbauteilhäfte 300b ist mit einer Montagelasche 302 zur Verschraubung des Anbauteils 300 mit dem Kapselungsgehäuse 400 des Motors 1 versehen.

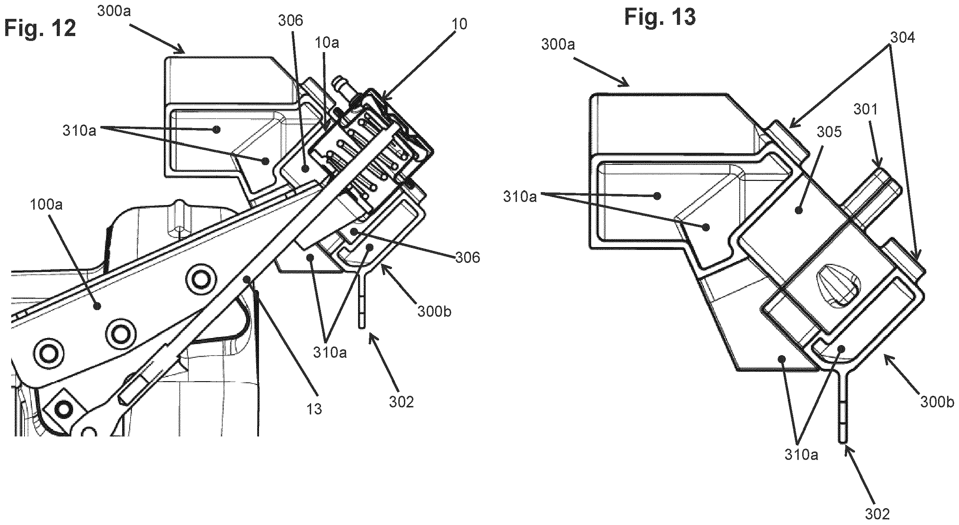

Figur 11 zeigt das Anbauteil 300 ohne Druckdose 10. Erkennbar ist bei dieser Darstellung die durch die Anbauteilhälften 300a, 300b gebildete zylindrische Ausnehmung 305, in der die Druckdose 10 aufgenommen wird. Im Bodenbereich der Ausnehmung 305 ist zudem ein Durchbruch 307 für die Durchführung eines Haltemittels 100a zur Fixierung der Druckdose 10 am Verbrennungsmotor 1 vorgesehen (s. Figur 12). Auch wird die Stellstange 13 zur Betätigung der Druckdose 10 durch diese Öffnung 307 durchgeführt.

Der Schnittdarstellung der Figur 12 lässt sich zudem der gebildete, ringförmige Luftspalt 306 zwischen dem Mantelgehäuse 10a der Druckdose 10 und den Anbauteilhälften 300a, 300b entnehmen. Ferner ist ersichtlich, dass die Anbauteilhälften 300a, 300b im Wesentlichen hohl ausgeführt sind und hierdurch Kühlkanäle 310a ausbilden. Das über die Anschlüsse 304 in die Kanäle 310a eingebrachte Kühlmedium des Kühlmittelkreislaufs der Verbrennungsmaschine 1 durchströmt die Anbauteilhälften 300a, 300b. Dadurch wird zumindest der Umfang der unteren Mantelhälfte der Druckdose 10 mittelbar durch das Kühlmedium umströmt und ausreichend gekühlt, so dass auch hier eine thermisch bedingte Schädigung und frühzeitige Alterung der Membran der Druckdose 10 verhindert bzw. zumindest deutlich abgeschwächt wird. Zusätzlich zur Druckdose 10 wird auch der Anschlussbereich des Haltemittels 100a sowie der Stellstange 13 gekühlt, so dass der hierdurch bedingte Wärmeübertrag von der Verbrennungsmaschine 1 auf die Druckdose 10 abgeschwächt wird. Insgesamt leistet auch diese Ausführung einen Beitrag zur Begrenzung der Oberflächentemperatur der Verbrennungskraftmaschine 1 auf maximal 220° C, was zur Einhaltung der SOLAS Konvention zwingend ist, was bspw. für maritime Verbrennungskraftmaschinen obligatorisch ist. In der globalen Betrachtung der Oberflächentemperatur der Verbrennungskraftmaschine 1 begrenzt sich selbstverständlich der Beitrag dieser Ausführung in einer Temperaturabsenkung in dem Nahbereich der sich nicht unterhalb der thermischen Kapselung 400 befindenden Druckdose 10.

Der Luftspalt 306 stellt eine vergleichsweise grosse Öffnung der thermischen Kapselung 400 dar und befindet sich im oberen Bereich der Verbrennungskraftmaschine 1. Auch ausserhalb dieser Öffnung 305 stellt die thermische Kapselung 400 keine hermetische Abschottung der Verbrennungskraftmaschine 1 dar. Im Zuge des dadurch vorliegenden Luftaustausches in dem gekapselten Volumen erfolgt über diesen Luftspalt 306 ein Luftaustritt. Bereits strömungsaufwärts der Druckdose 10 besteht eine Ummantelung des Luftspaltes 306 mit Gehäusewänden der Anbauteile 300a, 300b.

**Bezugszeichenliste:**

| | |
|---|---|
| Verbrennungskraftmaschine | 1 |
| Brennraum | 2 |
| Luftverteiler | 3 |
| Abgassammler | 4 |
| Wärmetauscher | 5 |
| Kühlkreislauf | 6 |
| Drucksteuerleitung | 7 |
| Druckdose | 10 |
| Mantelfläche | 10a |
| Druckkammer | 11 |
| Membran | 12 |
| Stellhebel | 13 |
| Vorsprung | 14 |
| Abgasturbolader | 20 |
| Verdichter | 21 |
| Turbine | 22 |
| Thermische Isolation | 23 |
| Waste-Gate | 24 |
| Schelle, Schellenteil-Element | 30 |
| Ringraum | 31 |
| Radialbohrung | 31a |
| Dichtungsnut | 32 |
| Dichtungsnut | 33 |
| Ringnut | 34 |
| O-Ring | 35 |
| Verbindungsbohrung | 36 |
| Deckel | 37 |
| Haltemittel | 38 |
| Verschraubung | 39 |
| Haltemittel | 100 |
| volumenvergrößerter Bereich | 101 |
| Öffnungen Kühlkanal | 102 |
| Anschlussstutzen | 102a, 102b |
| Aussparungen | 103, 104 |
| Buchsen | 105 |
| Querbereich | 106, 106* |
| Anschlussfläche | 106a |
| Aussparung | 108 |
| Anbauteil | 300 |
| Anbauteilhälfte | 300a, 300b |
| Verbindungslaschen | 301 |
| Montagelasche | 302 |
| Kühlleitungsansschlüsse | 304 |
| Ausnehmung | 305 |
| Luftspalt | 306 |
| Durchbruch | 307 |
| Kühlkanal | 310, 310*, 310a |

## Patentansprüche

1. Druckdosenvorrichtung zur pneumatisch-mechanischen Verstellung eines Waste-Gates (24) oder der Turbinen-Schaufeln eines Turboladers (20), umfassend eine Druckdose (10) mit einem Gehäuse und einer darin angeordneten Membran (12), die mit einem Stellglied (13) zur Übertragung einer mechanischen Stellkraft auf das Waste-Gate (24) oder die Turbinen-Schaufeln verbunden ist,
wobei im Bereich Z einer Gehäusewand der Druckdose (10), bevorzugt in einem Mantelbereich (10a) der Druckdose (10) ein oder mehrere Kühlkanäle (310, 310*, 310a) vorgehalten sind, die von einem externen Kühlmedienstrom (6) zur dedizierten Kühlung der Druckdose (10) und/oder zur Abschwächung des Wärmeeintrags in die Druckdose (10) durchströmbar sind,
**dadurch gekennzeichnet,**
**dass** die Druckdosenvorrichtung wenigstens ein Anbauteil (30, 300) umfasst, das am Gehäuse der Druckdose (10) montiert ist und die ein oder mehreren Kühlkanäle aufweist, die einen Kühlmittelstrom um eine Mantelfläche des Druckdosengehäuses ermöglichen.

2. Druckdosenvorrichtung nach Anspruch 1, **dadurch gekennzeichnet, dass** das Anbauteil (30) die Gehäusemantelfläche (10a) der Druckdose (10) dichtend umfasst.

3. Druckdosenvorrichtung nach Anspruch 2, **dadurch gekennzeichnet, dass** das Anbauteil (30) schellenartig ausgeführt ist und die Mantelfläche (10a) der Druckdose (10) umfasst, insbesondere wird das Anbauteil (30) durch ein miteinander verschraubbares Schellenpaar gebildet, wobei das Schellenpaar idealerweise zwei identische Schellenteil-Elemente umfasst.

4. Druckdosenvorrichtung nach einem der vorstehenden Ansprüche 2 oder 3, **dadurch gekennzeichnet, dass** das Anbauteil (30) im Bereich seiner Innenwand ein oder mehrere radial verlaufende Nuten zur Ausbildung eines um die Mantelfläche (10a) der Druckdose (10) verlaufenden Kühlraums aufweist, wobei dieser vorzugsweise rotationssymmetrisch zur Längsachse der Druckdose (10) angeordnet ist.

5. Druckdosenvorrichtung nach Anspruch 4, **dadurch gekennzeichnet, dass** das Anbauteil (30) im Bereich der wenigstens einen Kühlnut ein oder mehrere in die Kühlnut mündende Radialbohrungen (31a) zum Anschluss eines externen Kühlkreislaufs (6a, 6b) umfasst.

6. Druckdosenvorrichtung nach einem der vorhergehenden Ansprüche 2 bis 5, **dadurch gekennzeichnet, dass** das Anbauteil (30) im Bereich der Innenwand ein oder mehrere Dichtungsnuten (32, 33) mit eingesetzten Dichtelementen (35), insbesondere O-Ring-Dichtungen aufweist.

7. Druckdosenvorrichtung nach einem der vorhergehenden Ansprüche 2 bis 6, **dadurch gekennzeichnet, dass** das Anbauteil (30) zumindest teilweise auch mindestens eine Deckelseite der Druckdose (10) umgibt, insbesondere mit der Bodenseite der Druckdose (10) und/oder einem Haltemittel (38) der Druckdose (10) zur Montage am Turbolader (20) verschraubt ist.

8. Druckdosenvorrichtung nach einem der vorhergehenden Ansprüche 2 bis 7, **dadurch gekennzeichnet, dass** das Anbauteil (30) im Bereich seiner Innenwand wenigstens ein Innenvolumen (34), insbesondere einen Ringraum, zur Aufnahme eines Gehäusevorsprungs (14), insbesondere eine auf der Mantelfläche (10a) der Druckdose (10) ausgeformte ringförmige Wulst aufweist.

9. Druckdosenvorrichtung nach Anspruch 1, **dadurch gekennzeichnet, dass** zwischen Anbauteil (300) und Gehäusemantelfläche (10a) der Druckdose (10) ein Luftspalt (306) vorgesehen ist.

10. Druckdosenvorrichtung nach Anspruch 9, **dadurch gekennzeichnet, dass** das Anbauteil (300) mehrteilig ausgeführt ist, insbesondere aus zwei Anbauteilhälften (300a, 300b) besteht, die vorzugsweise im Bereich ihrer Kontaktkanten ein oder mehrere Laschen (302) zur gegenseitigen Verbindung der Anbauteilhälften (300a, 300b) umfassen.

11. Druckdosenvorrichtung nach einem der Ansprüche 9 oder 10, **dadurch gekennzeichnet, dass** das Anbauteil (300) die Gehäusemantelfläche (10a) der Druckdose (10) in Längsrichtung der Druckdose (10) nur abschnittsweise umgibt, insbesondere ist der den Druckanschluss umfassende Bereich der Druckdose (10) durch das Anbauteil (300) nicht umgeben und von aussen frei zugänglich.

12. Verbrennungskraftmaschine (1) mit Turboaufladung und wenigstens einer Druckdosenvorrichtung gemäß einem der vorhergehenden Ansprüche zur pneumatisch-mechanischen Verstellung eines Waste-Gates (24) und/oder der Turbinenschaufeln eines Turboladers.

13. Verbrennungskraftmaschine (1) nach Anspruch 12, **dadurch gekennzeichnet, dass** ein Kühlkreislauf (6) der Verbrennungskraftmaschine (1) über einen Abzweig (6a, 6b) mit dem wenigstens einen Kühlkanal (31) der Druckdosenvorrichtung in Verbindung steht.

14. Verbrennungskraftmaschine (1) nach Anspruch 13, **dadurch gekennzeichnet, dass** der Kühlmittelpfad (6a, 6b) der Druckdosenvorrichtung parallel zum Kühlmittelpfad für die Kühlung der Brennräume (2) der Verbrennungskraftmaschine (1) verläuft.

15. Verbrennungskraftmaschine (1) nach einem der Ansprüche 12 bis 14, **dadurch gekennzeichnet, dass** die Verbrennungskraftmaschine (1) wenigstens zwei Zylinderbänke mit jeweils einem Turbolader (20) umfasst, wobei die Einzelteile des Anbauteils (30) der Druckdosenvorrichtung als Gleichteile ausgeführt sind.

16. Verbrennungskraftmaschine nach einem der Ansprüche 12 bis 15, **dadurch gekennzeichnet, dass** Turbolader (20) und gegebenenfalls ein Waste-Gate (24) und/oder Abgassammler (4) thermisch gekapselt sind.

17. Verbrennungskraftmaschine nach Anspruch 16, **dadurch gekennzeichnet, dass** sich die Druckdose (10) und Bereiche solcher Bauteile, die mechanisch mit ihr verbundenen sind und sich nicht innerhalb derjenigen Kappselung befinden, welche den Turbolader (20) umgibt, unter einer separaten Kappselung befinden.

## Claims

1. Actuator device for the pneumatic-mechanical adjustment of a wastegate (24) or of the turbine blades of a turbocharger (20), comprising an actuator (10) having a housing and a membrane (12) arranged therein which is connected to an actuator element (13) for transmitting a mechanical actuating force to the wastegate (24) or to the turbine blades,
there being provided in the region of a housing wall of the actuator (10), preferably in a peripheral region (10a) of the actuator (10), one or more cooling channels (310, 310*, 310a) through which there can flow an external cooling medium stream (6) for the dedicated cooling of the actuator (10) and/or for reducing the heat input into the actuator (10),
**characterised in that**
the actuator device comprises at least one attachment part (30, 300) which is mounted on the housing of the actuator (10) and has the one or more cooling channels which permit a flow of coolant around a peripheral surface of the actuator housing.

2. Actuator device according to claim 1, **characterised in that** the attachment part (30) envelops the housing peripheral surface (10a) of the actuator (10) in a sealing manner.

3. Actuator device according to claim 2, **characterised in that** the attachment part (30) is of clamp-like form and encloses the peripheral surface (10a) of the actuator (10), in particular the attachment part (30) is formed by a pair of clamps which can be screwed together, the pair of clamps ideally comprising two identical clamp part elements.

4. Actuator device according to either of the preceding claims 2 or 3, **characterised in that** the attachment part (30) has in the region of its inner wall one or more radially extending grooves for forming a cooling chamber extending around the peripheral surface (10a) of the actuator (10), the cooling chamber preferably being arranged rotationally symmetrically relative to the longitudinal axis of the actuator (10).

5. Actuator device according to claim 4, **characterised in that** the attachment part (30) comprises in the region of the at least one cooling groove one or more radial bores (31a), which open into the cooling groove, for the connection of an external cooling circuit (6a, 6b).

6. Actuator device according to any one of the preceding claims 2 to 5, **characterised in that** the attachment part (30) has in the region of the inner wall one or more sealing grooves (32, 33) with inserted sealing elements (35), in particular O-ring seals.

7. Actuator device according to any one of the preceding claims 2 to 6, **characterised in that** the attachment part (30) also at least partially surrounds at least one cover side of the actuator (10), in particular is screwed to the base side of the actuator (10) and/or to a retaining means (38) of the actuator (10) for mounting on the turbocharger (20).

8. Actuator device according to any one of the preceding claims 2 to 7, **characterised in that** the attachment part (30) has in the region of its inner wall at least one inner volume (34), in particular an annular chamber, for receiving a housing projection (14), in particular an annular bead formed on the peripheral surface (10a) of the actuator (10).

9. Actuator device according to claim 1, **characterised in that** an air gap (306) is provided between the attachment part (300) and the housing peripheral surface (10a) of the actuator (10).

10. Actuator device according to claim 9, **characterised in that** the attachment part (300) is in multi-part form, in particular consists of two attachment part halves (300a, 300b) which preferably comprise in the region of their contact edges one or more lugs (302) for mutual connection of the attachment part halves (300a, 300b).

11. Actuator device according to either claim 9 or claim 10, **characterised in that** the attachment part (300) surrounds the housing peripheral surface (10a) of the actuator (10) in the longitudinal direction of the actuator (10) only in some portions, in particular the region of the actuator (10) that comprises the pressure connection is not surrounded by the attachment part (300) and is freely accessible from the outside.

12. Combustion engine (1) with turbocharging and having at least one actuator device according to any one of the preceding claims for the pneumatic-mechanical adjustment of a wastegate (24) and/or of the turbine blades of a turbocharger.

13. Combustion engine (1) according to claim 12, **characterised in that** a cooling circuit (6) of the combustion engine (1) is connected by way of a branch (6a, 6b) to the at least one cooling channel (31) of the actuator device.

14. Combustion engine (1) according to claim 13, **characterised in that** the coolant path (6a, 6b) of the actuator device runs parallel to the coolant path for the cooling of the combustion chambers (2) of the combustion engine (1).

15. Combustion engine (1) according to any one of claims 12 to 14, **characterised in that** the combustion engine (1) comprises at least two cylinder banks each having a turbocharger (20), the individual parts of the attachment part (30) of the actuator device being in the form of carry-over parts.

16. Combustion engine according to any one of claims 12 to 15, **characterised in that** the turbocharger (20) and optionally a wastegate (24) and/or exhaust manifold (4) are thermally encapsulated.

17. Combustion engine according to claim 16, **characterised in that** the actuator (10) and regions of those components that are mechanically connected thereto and that are not located within the encapsulation that surrounds the turbocharger (20) are located in a separate encapsulation.

## Revendications

1. Dispositif à capsule sous pression destiné au réglage pneumatique et mécanique d'une soupape de décharge (24) ou des aubes de turbine d'un turbocompresseur (20), comprenant une capsule sous pression (10) dotée d'un boîtier et d'une membrane (12) disposée à l'intérieur de celui-ci, laquelle est reliée à un actionneur (13) pour transmettre une puissance de réglage mécanique à la soupape de décharge (24) ou aux aubes de turbine,
dans lequel, dans la zone d'une paroi de boîtier de la capsule sous pression (10), de préférence dans une zone de surface (10a) de la capsule sous pression (10), se trouvent un ou plusieurs canaux de refroidissement (310, 310*, 310a) qui peuvent être traversés par un flux de fluide de refroidissement (6) externe destiné au refroidissement dédié de la capsule sous pression (10) et/ou à la réduction de l'apport de chaleur dans la capsule sous pression (10), **caractérisé en ce que**
le dispositif à capsule sous pression comprend au moins une pièce rapportée (30, 300) qui est montée sur le boîtier de la capsule sous pression (10) et qui présente un ou plusieurs canaux de refroidissement qui permettent un flux de fluide de refroidissement autour d'une surface latérale du boîiter de capsule sous pression.

2. Dispositif à capsule sous pression selon la revendication 1, **caractérisé en ce que** la pièce rapportée (30) entoure de manière étanchéifiante la surface latérale (10a) de boîtier de la capsule sous pression (10).

3. Dispositif à capsule sous pression selon la revendication 2, **caractérisé en ce que** la pièce rapportée (30) est réalisée en forme de collier et entoure la surface latérale (10a) de la capsule sous pression (10), la pièce rapportée (30) étant en particulier formée par une paire de colliers aptes à être vissés l'un à l'autre, la paire de colliers comprenant idéalement deux éléments de partie de collier identiques.

4. Dispositif à capsule sous pression selon l'une des revendications 2 ou 3, **caractérisé en ce que** la pièce rapportée (30) présente, dans la zone de sa paroi intérieure, une ou plusieurs rainures s'étendant radialement destinées à former un espace de refroidissement s'étendant autour de la surface latérale (10a) de la capsule sous pression (10), ledit espace de refroidissement étant de préférence disposé avec symétrie de révolution par rapport à l'axe longitudinal de la capsule sous pression (10).

5. Dispositif à capsule sous pression selon la revendication 4, **caractérisé en ce que** la pièce rapportée (30) comprend, dans la zone de l'au moins une rainure de refroidissement, un ou plusieurs trous radiaux (31a) débouchant dans la rainure de refroidissement, destinés au raccordement d'un circuit de refroidissement (6a, 6b) externe.

6. Dispositif à capsule sous pression selon l'une des revendications précédentes 2 à 5, **caractérisé en ce que** la pièce rapportée (30) présente, dans la zone de la paroi intérieure, une ou plusieurs rainures d'étanchéité (32, 33) avec des éléments d'étanchéité (35) insérés, en particulier des joints toriques d'étanchéité.

7. Dispositif à capsule sous pression selon l'une des revendications précédentes 2 à 6, **caractérisé en ce que** la pièce rapportée (30) entoure au moins en partie également au moins un côté couvercle de la capsule sous pression (10) et est en particulier vissée au côté inférieur de la capsule sous pression (10) et/ou à un moyen de retenue (38) de la capsule sous pression (10) pour le montage sur le turbocompresseur (20).

8. Dispositif à capsule sous pression selon l'une des revendications précédentes 2 à 7, **caractérisé en ce que** la pièce rapportée (30) présente, dans la zone de sa paroi intérieure, au moins un volume intérieur (34), en particulier un espace annulaire, destiné à recevoir une saillie de boîtier (14), en particulier un renflement annulaire formé sur la surface latérale (10a) de la capsule sous pression (10).

9. Dispositif à capsule sous pression selon la revendication 1, **caractérisé en ce qu'**un intervalle d'air (306) est prévu entre la pièce rapportée (300) et la surface latérale (10a) de boîtier de la capsule sous pression (10).

10. Dispositif à capsule sous pression selon la revendication 9, **caractérisé en ce que** la pièce rapportée (300) est réalisée en plusieurs parties, se compose en particulier de deux moitiés de pièce rapportée (300a, 300b), qui comprennent de préférence une ou plusieurs éclisses (302) dans la zone de leurs bords de contact pour la liaison mutuelle des moitiés de pièce rapportée (300a, 300b).

11. Dispositif à capsule sous pression selon l'une des revendications 9 ou 10, **caractérisé en ce que** la pièce rapportée (300) entoure uniquement sur certaines parties la surface latérale (10a) de boîtier de la capsule sous pression (10) dans la direction longitudinale de la capsule sous pression (10), la zone de la capsule sous pression (10) comprenant le raccord de tubulure de refoulement étant en particulier non entourée par la pièce rapportée (300) et accessible librement depuis l'extérieur.

12. Machine à combustion interne (1) dotée d'une suralimentation et d'au moins un dispositif à capsule sous pression selon l'une des revendications précédentes destiné au réglage pneumatique et mécanique d'une soupape de décharge (24) et/ou des aubes de turbine d'un turbocompresseur.

13. Machine à combustion interne (1) selon la revendication 12, **caractérisée en ce qu'**un circuit de refroidissement (6) de la machine à combustion interne (1) est en liaison avec l'au moins un canal de refroidissement (31) du dispositif à capsule sous pression par le biais d'une dérivation (6a, 6b).

14. Machine à combustion interne (1) selon la revendication 13, **caractérisée en ce que** le chemin de fluide de refroidissement (6a, 6b) du dispositif à capsule sous pression s'étend parallèlement au chemin de fluide de refroidissement pour le refroidissement des chambres de combustion (2) de la machine à combustion interne (1).

15. Machine à combustion interne (1) selon l'une des revendications 12 à 14, **caractérisée en ce que** la machine à combustion interne (1) comprend au moins deux bancs de cylindres dotés respectivement d'un turbocompresseur (20), les éléments de la pièce rapportée (30) du dispositif à capsule sous pression étant réalisés sous la forme d'éléments invariants.

16. Machine à combustion interne selon l'une des revendications 12 à 15, **caractérisée en ce que** le turbocompresseur (20) et le cas échéant une soupape de décharge (24) et/ou un collecteur d'échappement (4) sont thermiquement encapsulés.

17. Machine à combustion interne selon la revendication 16, **caractérisée en ce que** la capsule sous pression (10) et des zones de composants qui sont mécaniquement reliés à celle-ci et qui ne se trouvent pas à l'intérieur dudit encapsulage qui entoure le turbocompresseur (20), se trouvent sous un encapsulage séparé.
